# EUROPEAN PATENT APPLICATION

(11) **EP 1 420 054 A1**
(43) Date of publication of application: **19.05.2004**
(21) Application number: 03255901.5
(22) Date of filing: 19.09.2003
(51) Int. Cl.: C09J 133/02, C09J 133/14, C09J 155/00

(54) **Curable adhesive compositions**

(30) Priority: 18.11.2002 US 427273 P
(71) Applicant: ROHM AND HAAS COMPANY, Philadelphia, Pennsylvania 19106-2399 (US)
(72) Inventor: Zhao, Chen Qian, Alonquin Illinois 60102 (US)
(74) Representative: Kent, Venetia Katherine

(57) **Abstract**

An adhesive composition is provided, along with a method for bonding substrates with the provided compositions. The adhesive composition is curable and suitable for bonding laminates, but it does not require macromonomers with carboxyl-reactive groups.

## Description

### BACKGROUND:

This invention relates to a method of preparing a composite article and to an adhesive composition useful for forming such composite articles. In particular, the method of this invention includes applying a layer of an adhesive composition to a substrate, drying that layer or allowing it to dry, and contacting that layer with at least one other substrate. Composite articles are prepared by bonding two or more substrates together with an interposed adhesive composition. Substrates may be the same or different. The composite articles desirably have good adhesive strength; that is, the polymeric adhesive composition must adhere well to the substrates and be resistant to forces that lead to separation.

In some cases, the applied adhesive composition contains a solvent or other fluid, which, after application of the adhesive composition to a substrate, is allowed to evaporate; sometimes, evaporation is enhanced or speeded by the application of heat and/or forced gas flow. Often, curing (*i.e.*, desirable chemical reactions that are thought to increase the strength of the adhesive and/or its ability to bond to substrates) takes place during or after the drying and/or heating process. In some cases, these chemical reactions form crosslinks between polymers.

One approach to providing adhesive compositions is found in US Patent 5,578,683, which discloses pressure-sensitive adhesives containing graft copolymers that have crosslinkable macromonomers as polymerized units. Crosslinkable macromonomers are specialty materials that are potentially difficult to purchase and/or manufacture. An object of the present invention is to provide curable adhesive compositions that do not require such specialty materials.

### STATEMENT OF THE INVENTION:

In a first aspect of the present invention, there is provided an adhesive composition comprising:
(a) 10% to 90% fluid medium, by weight based on the weight of said adhesive composition, and
(b) 10% to 90% at least one acrylic polymer composition, by solid weight based on the weight of said adhesive composition, wherein said acrylic polymer composition comprises as polymerized units:
   (i) at least one monomer with carboxyl functionality, and
   (ii) at least one carboxyl-reactive monomer, wherein said carboxyl-reactive monomer has molecular weight less than 800.

In a second aspect of the present invention, there is provided a method for bonding substrates comprising: applying a layer of an adhesive composition to a substrate; drying or allowing to dry said layer of said adhesive composition; and contacting at least one subsequent substrate to said layer of said adhesive composition, wherein said adhesive composition comprises:
(a) 10% to 90% fluid medium, by weight based on the weight of said adhesive composition, and
(b) 10% to 90% at least one acrylic polymer composition, by solid weight based on the weight of said adhesive composition, wherein said acrylic polymer composition comprises as polymerized units:
   (i) at least one monomer with carboxyl functionality, and
   (ii) at least one carboxyl-reactive monomer, wherein said carboxyl-reactive monomer has molecular weight less than 800.

### DETAILED DESCRIPTION

The practice of the present invention involves the use of compositions that contain an acrylic polymer composition and a fluid medium. As used herein, "fluid medium" means a fluid that forms a continuous phase and that bears the acrylic polymer composition in a distributed form such as a solution, dispersion, or combination thereof. By "fluid" is meant a liquid with viscosity of 20 Pa•s (20,000 cps) or less at 25°C, as measured by standard methods, for example using Brookfield viscometer model DVI with a #25 spindle. In some embodiments, the fluid medium will be aqueous, which means herein that the fluid medium contains water in the amount of 50% or more by weight, based on the weight of the fluid medium; among aqueous media, preferred is water in the amount of 80% or more.

As used herein, "solid weight" of a material refers to compositions in which a material that is a polymer and/or that is a solid at 25°C is dissolved and/or suspended in a fluid; the "solid weight" of such a material is the weight that material would have if it were isolated from the composition; the solids weight of that material in a composition is independent of the amount of fluid present in the composition.

As used herein, "acrylic polymer composition" means a composition that contains one or more acrylic polymers. If two or more acrylic polymers are used, they may be the same or different. As used herein, "acrylic polymer" means a polymer that contains 25% or more by weight, based on the weight of the polymer, (meth)acrylic monomers as polymerized units. "(Meth)acrylic monomers" herein mean monomers with at least one functional group that is either acrylic or methacrylic. Similarly, "(meth)acrylate" herein means either acrylate or methacrylate. (Meth)acrylic monomers include acrylic acid, methacrylic acid, their esters, their amides, and derivatives thereof.

In preferred embodiments of the present invention, the acrylic polymer is not polymerized in the presence of resins or polymers that are not acrylic polymers. For example, preferred acrylic polymers of the present invention are not polymerized in the presence of tackifier resin or in the presence of epoxy resin.

As used herein, "polymerized units" refers to monomers that are polymerized to form a polymer. That is, when certain monomers are used to form a copolymer, those monomers are said to be included as polymerized units in that polymer. If that polymer is then mixed with a different polymer to form a polymer composition, the polymer composition is said to include those same certain monomers as polymerized units.

Some acrylic monomers suitable for inclusion as polymerized units in the acrylic polymer composition of the present invention are, for example, (meth)acrylic acid and alkyl (meth)acrylate esters wherein the ester group consists of a linear, branched or cyclic alkyl group with 1 to 70 carbon atoms. Some preferred alkyl (meth)acrylate esters are those with alkyl groups of 1 to 8 carbon atoms; more preferred are those with 1 to 4 carbon atoms.

Other suitable (meth)acrylic monomers are, for example, aryl (meth)acrylate esters, halogenated alkyl or aryl (meth)acrylate esters, other (meth)acrylate esters, substituted and unsubstituted (meth)acrylamides, (meth)acrylonitriles, derivatives thereof, or mixtures thereof. Also suitable are multiethylenically unsaturated monomers, such as, for example, di-, tri-, and tetra-(meth)acrylates. Also suitable are (meth)acrylate monomers with attached functional groups such as, for example, ethylenic unsaturation, epoxide or glycidyl groups, isocyanate groups, other reactive groups, combinations thereof, and mixtures thereof.

Some suitable (meth)acrylic monomers include, for example, methyl acrylate, ethyl acrylate (EA), propyl acrylate, isopropyl acrylate, n-butyl acrylate (BA), isobutyl acrylate, secondary butyl acrylate, t-butyl acrylate, pentyl acrylate, neopentyl acrylate, hexyl acrylate, heptyl acrylate, octyl acrylate, isooctyl acrylate, 2-ethylhexyl acrylate (EHA), decyl acrylate, isodecyl acrylate, lauryl acrylate, bomyl acrylate, isobornyl acrylate, myristyl acrylate, pentadecyl acrylate, stearyl acrylate and the like; methyl methacrylate, ethyl methacrylate, propyl methacrylate, isopropyl methacrylate, n-butyl methacrylate, isobutyl methacrylate, hexyl methacrylate, octyl methacrylate, isooctyl methacrylate, decyl methacrylate, isodecyl methacrylate, lauryl methacrylate, bornyl methacrylate, isobornyl methacrylate, myristyl methacrylate, pentadecyl methacrylate, stearyl methacrylate, phosphoethyl methacrylate and the like; and itaconic acid, fumaric acid, and the like.

Acrylic polymer compositions of the present invention may include as polymerized units, in addition to (meth)acrylic monomers, other monomers such as, for example, styrene, substituted styrene, vinyl acetate, olefins including ethylene, dienes including butadiene, vinyl chloride, sodium styrene sulfonates, sodium vinyl sulfonates, maleic acid, maleic anhydride, derivatives thereof, or mixtures thereof.

In some embodiments of the present invention, one or more of the acrylic polymers in the acrylic polymer composition will be dissolved in the fluid medium. In some embodiments, one or more of the acrylic polymers in the acrylic polymer composition will be dispersed in the fluid medium as a dispersion. "Dispersion" herein includes, latex, emulsion, suspension, other dispersed forms, or combinations thereof. In some embodiments, some acrylic polymer molecules will be dissolved while others will be dispersed, and in some embodiments some acrylic polymer molecules will be partly dissolved and partly dispersed. All combinations of solution and dispersion, and all forms of dispersion, are contemplated for use in the present invention. Preferred are solutions, latices, and combinations thereof. Latex polymers (also known as "emulsion polymers") are polymers made by the process of emulsion polymerization.

The acrylic polymer composition of some embodiments of the present invention will contain one or more macromonomers as polymerized units. Macromonomers are low molecular weight polymers having at least one functional group at the end of the polymer chain that is capable of further polymerization, when exposed to polymerization conditions, with itself or with other monomers (*i.e.*, is capable of forming a polymer of itself and/or capable of forming a copolymer of itself with other monomers). By "low molecular weight" is meant that the macromonomer has a degree of polymerization from about 10 to about 1,000, preferably from 20 to 200. By "degree of polymerization" is meant the number of polymerized monomer units present in the macromonomer. Typical macromonomers will have molecular weights of 800 to 200,000. In some embodiments, the polymerizable group at the end of the macromonomer is ethylenic unsaturation, the other monomers also contain ethylenic unsaturation, and the copolymerization is a free radical copolymerization. Some suitable methods of making macromonomers and of copolymerizing them with other monomers are disclosed in WO0222689. The monomers suitable for use in making acrylic polymers are also suitable for making macromonomers.

In some embodiments of the present invention, macromonomers are not included as polymerized units in the acrylic polymer composition. In embodiments where macromonomers are included, a preferred amount of macromonomer is 0.1% or more by weight based on the solid weight of the acrylic polymer composition; more preferred is 1% or more; still more preferred is 4% or more. Also, in embodiments where macromonomers are included, a preferred amount of macromonomer is 20% or less by weight based on the solid weight of the acrylic polymer composition; more preferred is 10% or less; still more preferred is 7% or less.

The acrylic polymer composition of the present invention contains, as polymerized units, monomers with carboxyl functionality. Suitable monomers will have one or more carboxyl groups, or they will have groups such as anhydrides that readily form carboxyl groups. Suitable monomers with carboxyl functionality include, for example, (meth)acrylic acid, (meth)acryloxypropionic acid, itaconic acid, aconitic acid, maleic acid or anhydride, fumaric acid, crotonic acid, monoalkyl maleate, monoalkyl fumarate, monoalkyl itaconate, similar acid monomers, and mixtures thereof. The alkyl groups suitable for use in the monoalkyl esters listed above are C1-C8 linear, branched, or cyclic alkyl groups, including, for example, ethyl, methyl, and butyl groups. Also suitable for use as monomers with carboxyl functionality are macromonomers that contain, as polymerized units, suitable monomers with carboxyl functionality. Preferred monomers with carboxyl functionality are acrylic acid; methacrylic acid; macromonomers containing acrylic acid and/or methacrylic acid as polymerized units; and mixtures thereof.

The amount of monomer with carboxyl functionality, in some embodiments, will be 0.1% or more by weight based on the solid weight of the acrylic polymer composition; preferred is 0.2% or more; more preferred is 0.5% or more; even more preferred is 1% or more; and most preferred is 1.4% or more. The amount of monomer with carboxyl functionality, in some embodiments, will be 20% or less by weight based on the solid weight of the acrylic polymer composition; preferred is 15% or less; more preferred is 10% or less, and most preferred is 5% or less.

Also included in the acrylic polymer composition of the present invention are polymerized units of at least one carboxyl-reactive monomer. As used herein, "carboxyl-reactive monomer" means a monomer that contains at least one carboxyl-reactive group, which is a reactive group capable of reacting with carboxyl functionality. Without limiting the invention to any specific mechanism, it is contemplated that while the acrylic polymer composition is dissolved and/or dispersed in the fluid medium, the carboxyl functionality and the carboxyl-reactive groups will not react to any substantial extent. It is further contemplated that when the fluid medium is removed by drying, heating, and/or other means, the carboxyl-reactive groups will react with the carboxyl functionality to provide crosslinking, which is thought to improve the strength and/or adhesion of the adhesive.

Any carboxyl-reactive group that is capable of reacting with carboxyl functionality and that can be attached to a monomer capable of use as a polymerized unit in an acrylic polymer is suitable for use in the present invention. Suitable carboxyl-reactive groups include, for example, isocyanate groups, glycidyl groups, acetoacetate groups, acetoacetamide groups, and mixtures thereof. In some embodiments, the carboxyl reactive monomer will have one carboxyl-reactive group. In other embodiments, the carboxyl reactive monomer will have more than one carboxyl-reactive group. Some suitable monomers that are capable of inclusion as polymerized units in acrylic polymers and that have suitable carboxyl-reactive groups include, for example, urethane (meth)acrylates with available isocyanate groups, other (meth)acrylates with available isocyanate groups, glycidyl (meth)acrylate, vinyl acetoacetate, acetoacetoxyalkyl (meth)acrylates, allyl acetoacetate, 2,3-di(acetoacetoxy)alkyl (meth)acrylates, vinyl acetoacetamide, acetoacetoxyalkyl (meth)acrylamide, substituted versions thereof, and mixtures thereof. The alkyl groups suitable for use in the carboxyl-reactive monomers listed above are C1-C8 linear, branched, or cyclic alkyl groups, including, for example, ethyl, methyl, and butyl groups. Preferred carboxyl-reactive monomers are acetoacetoxyethyl (meth)acrylate, glycidyl (meth)acrylate, and mixtures thereof; more preferred is glycidyl methacrylate.

The carboxyl-reactive monomer is a macromonomer in some embodiments of the present invention.Preferred are embodiments in which the carboxyl-reactive monomer is not a macromonomer. The carboxyl-reactive monomers of the present invention preferably have molecular weight of 800 or less; more preferably 500 or less; and even more preferably 250 or less.

The amount of carboxyl-reactive monomer, in some embodiments, will be 0.05% or more by weight based on the solid weight of the acrylic polymer composition; preferred is 0.1 % or more; more preferred is 0.2% or more; even more preferred is 0.4% or more; and most preferred is 0.5% or more. The amount of carboxyl-reactive monomer, in some embodiments, will be 10% or less by weight based on the solid weight of the acrylic polymer composition; preferred is 5% or less; more preferred is 2% or less; and most preferred is 1% or less.

The acrylic polymer composition of this invention will typically have one or more glass transition temperatures (Tg's) as measured via differential scanning calorimetry. Preferably, all Tg's are in the range from -100°C to +50°C. If the intended use of the adhesive composition is as a pressure-sensitive adhesive, at least one Tg is preferably in the range from -70°C to -10°C, more preferably, -70°C to -35°C. If the intended use is wet/dry bond laminating adhesive, at least one Tg is preferably in the range from -50°C to +50°C, more preferably, -30°C to +25°C, still more preferably, -10°C to +10°C. If the intended use is a heat seal adhesive, at least one Tg is preferably in the range from -20°C to +50°C, more preferably, +10°C to +30°C; additionally, the modulus for heat seal adhesives is preferably approximately 3 × 10⁶ dyne/cm² at temperatures in the range from 25°C to 100°C. If the intended use is as a cold seal adhesive, at least one Tg is preferably in the range from -100°C to +10°C, more preferably -80°C to 0°C.

In some embodiments, the acrylic polymer composition used in the adhesive composition of the present invention contains one or more polymers prepared by emulsion polymerization techniques well known in the art. The emulsion polymer or polymers may be formed from any monomer or mixture of monomers which yields a water-insoluble latex, film-forming polymer. It is contemplated that in some embodiments, the adhesive composition will be heated during drying and/or during the process of bonding substrates together. The polymer is considered herein to be "film forming" if it is capable of forming a film at 20°C or at the highest temperature to which it will be exposed during drying and/or during the process of bonding substrates together.

The molecular weight of the emulsion polymer may be adjusted through the addition of a chain transfer agent, such as n-dodecyl mercaptan, during emulsion polymerization to give a suitable balance of adhesive and cohesive strength.

The adhesive composition can contain conventional adhesive adjuvants such as, for example, tackifiers, emulsifiers and wetting agents, crosslinkers, monomers, oligomers, polymers, solvents or plasticizers, buffers, neutralizers, thickeners or rheology modifiers, biocides, antifoaming or defoaming agents. Preferred are compositions without any substantial amount of crosslinker. By "crosslinker" is meant herein a compound that is not one of the acrylic polymers of the present invention and that is capable of reacting with certain polymers to form crosslinks. In particular, preferred embodiments of the present invention do not contain amine compounds, other than small amounts (1% or less by weight, based on the solid weight of the adhesive composition) that may be used in the polymerization process; more preferred is 0.5% or less; most preferred is 0.1% or less.

Some adhesive compositions are one-pack systems and some are multi-pack systems. One-pack systems are compositions for which all the ingredients are added to a single container, which can then be stored for a relatively long time without losing any desirable properties; after storage it can be removed from that container and applied to a substrate without addition of further ingredients. Multi-pack systems are compositions which, in order to retain their useful properties, must be stored in two or more separate containers; the contents of the containers are mixed together a relatively short time before the mixture is applied to a substrate. Multi-pack systems are typically employed when the ingredients are designed to undergo a chemical reaction immediately after the packs are mixed. Adhesive compositions that are either one-pack or multi-pack systems may be used in the practice of the present invention; one-pack systems are preferred.

In one-pack embodiments of the present invention, the polymers, monomers, and reactive groups would preferably be chosen so that the carboxyl-reactive groups and the carboxyl functionality would not react to any significant extent during storage of the container that contains the adhesive composition.

The acrylic polymer composition of the present invention contains one or more acrylic polymers. In some embodiments, the acrylic polymer composition will contain at least two different acrylic polymers: a first acrylic polymer will contain, as polymerized units, at least one monomer with carboxyl functionality and will not contain, as polymerized units, any carboxyl-reactive monomers; while a second acrylic polymer will not contain, as polymerized units, any monomers with carboxyl functionality and will contain, as polymerized units, at least one carboxyl-reactive monomer. It is contemplated that such embodiments could be practiced as multi-pack systems, typically with the first acrylic polymer in one container and the second acrylic polymer in a different container. It is also contemplated that some of these embodiments could be practiced as one-pack systems.

Preferred are embodiments of the present invention that contain at least one acrylic polymer that contains, as polymerized units, monomers with carboxyl functionality and carboxyl-reactive monomers. Acrylic polymers that contain, as polymerized units, monomers with carboxyl functionality and carboxyl-reactive monomers are known herein as "bifunctional acrylic polymers."

A wide variety of bifunctional acrylic polymers are suitable for use in the present invention. For example, one suitable bifunctional acrylic polymer would be a copolymer that included as polymerized units at least one monomer with carboxyl functionality and at least one suitable carboxl-reactive-monomer but that did not include any macromonomers as polymerized units. Other suitable bifunctional acrylic polymers include at least one macromonomer as polymerized units; among such polymers, some suitable polymers include as polymerized units monomers with carboxyl functionality that are not macromonomers. Other suitable bifunctional acrylic polymers include as polymerized units macromonomers with carboxyl functionality. Still other suitable bifunctional acrylic polymers include as polymerized units both macromonomers with carboxyl functionality and monomers with carboxyl functionality that are not macromonomers. Yet other suitable bifunctional acrylic polymers include as polymerized units at least one macromonomer that has no carboxyl functionality. Also suitable are mixtures and copolymers of the above suitable bifunctional acrylic polymers.

Embodiments that employ bifunctional acrylic polymers generally could be practiced as either one-pack or multi-pack systems. Generally, when using embodiments that may be practiced as either one-pack or multi-pack systems, the simplicity and convenience of the one-pack system will make the one-pack preferable over the multi-pack. In particular, embodiments with bifunctional polymers are advantageous because of simplicity of manufacture of the polymer and because the convenience of the one-pack system is available. A preferred embodiment of the present invention employs at least one bifunctional polymer in a one-pack system.

The layer of adhesive composition that is applied to a substrate may be continuous or discontinuous; it may have uniform thickness or it may be thicker in some places than others. After application to the substrate, the aqueous composition is typically dried, or allowed to dry, at a temperature from 20°C to 95°C.

In some embodiments of the present invention, after the adhesive composition is applied to a first substrate, it is contacted with a subsequent substrate to form an assembly, which is optionally subjected to applied pressure such as by passing it between rollers to effect increased contact of the substrates with the adhesive composition. In another embodiment the adhesive composition may be simultaneously or sequentially applied to two surfaces of a first substrate, which coated surfaces are then simultaneously or sequentially bonded to two subsequent substrates, which may be the same or different relative to the first substrate and each other. It is further contemplated that the composite article may subsequently be bonded to one or more other substrates using the same or a different adhesive before or after the process described herein. Also, it is contemplated that a wide variety of arrangements of substrates and polymeric adhesive layers may be used to form the composite article. For example, multiple substrates may be alternated with multiple layers of adhesive, such as for example in multilayered laminates. For another example, in some embodiments, layers of adhesive composition, each applied to its own substrate, may be brought together.

In some embodiments of the present invention, a layer of the adhesive composition will be applied to a substrate and dried before being contacted with a subsequent substrate. Alternatively, in other embodiments, using a process known as "wet bonding," a layer of the adhesive composition will be applied to a substrant; a subsequent substrate will be contacted with the layer of adhesive composition; and the assembly thus formed will then be dried or allowed to dry. It is contemplated that when multiple substrates and/or multiple subsequent substrates and/or multiple layers of adhesives are used, any combination of wet bonding and/or other methods may be used. When wet bonding is used to bond thin, flat substrates, the process is called "wet bond lamination." The present invention is contemplated to be particularly useful in wet bond lamination.

Typical substrates include, for example, paper, fabric, metals, metal foils, metalized polymers, and various polymers, including, for example, polymers with low surface energies. Substrates may be used with or without a prior treatment such as an acid etch or corona discharge or primer. The adhesive composition may be applied using conventional application methods such as, for example, roll coating, doctor-blade application, and printing methods.

Some composite articles are made of relatively thin, flat layers; such composite articles are generally known as laminates. In many cases, one or more of the substrates in a laminate is a polymeric film, including, for example, untreated, metalized, and treated polymeric films. The method of this invention is useful for preparing various types of composite articles, including laminates, especially flexible laminates. Laminates are used to provide packaging which is light-weight and flexible. It is desirable to use the adhesive composition at a low application weight to minimize the weight of the laminate, to maintain flexibility, and to minimize cost.

Crosslinking can be observed in some embodiments of the present invention. Typically, the occurrence of crosslinking in polymers can be observed using any of a variety of methods known in the art, as described for example by L.H. Sperling in Introduction to Physical Polymer Science, second edition, Wiley-Interscience, 1992. For example, crosslinked polymers generally cannot be dissolved in any solvent. Also, crosslinked polymers generally give a distinctive response in Dynamic Mechanical Analysis (DMA) testing: in the "plateau" temperature range (*i.e.*, temperatures ranging from 50°C above the glass transition temperature (Tg) up to 200°C, or up to the temperature of degradation, if that is less than 200°C), a crosslinked polymer will generally have a relatively flat elastic modulus, as measured by the shear elastic modulus (G') or the tensile elastic modulus (E'). For example, an adhesive composition could be tested by DMA by drying or allowing the composition to dry under conditions (*e.g.*, temperature, time, etc.) resembling the expected drying conditions during application to a substrate; the dried composition could then be measured by DMA at 6.28 cycles/sec from 50°C above Tg up to 200°C (or up to the temperature of degradation, if that is less than 200°C); normally if the dried composition is crosslinked, the G' values over the entire temperature range will be between 1 kPa (10⁴ dyne/cm²) and 1 MPa (10⁷ dyne/cm²). The glass transition temperature, for the purpose of defining the plateau temperature range, is measured herein as the temperature of the peak in the curve of tan(delta) *vs*. temperature in the DMA test. If more than one Tg is present in the dried adhesive composition, the DMA assessment of crosslinking is made by examining the modulus from 50°C above the highest Tg up to 200°C (or the degradation temperature, if that is lower than 200°C).

It is to be understood that for purposes of the present specification and claims that the range and ratio limits recited herein can be combined. For example, if ranges of 60 to 120 and 80 to 110 are recited for a particular parameter, it is understood that the ranges of 60 to 110 and 80 to 120 are also contemplated. Additionally, if minimum range values of 1 and 2 are recited, and if maximum range values of 3, 4, and 5 are recited, then the following ranges are all contemplated: 1 to 3, 1 to 4, 1 to 5, 2 to 3, 2 to 4, and 2 to 5.

### Abbreviations:

- AA =: acrylic acid
- MAA =: methacrylic acid
- MMA =: methyl methacrylate
- BA =: n-butyl acrylate
- EA =: ethyl acrylate
- GMA =: glycidyl methacrylate
- HSLDPE =: high slip low density polyethylene
- mPET =: metalized polyethylene terephthalate
- Robond™ 2000 =: Aqueous acrylic latex polymer adhesive, from Rohm and Haas Co., Philadelphia, PA
- Primal™ Resin 18 =: Aqueous solution polymer, EA/MAA, from Rohm and Haas Co., Philadelphia, PA
- Disponil™ FES-32 =: fatty alkyl ether sulfate, sodim salt from Henkel Corp., Ambler PA
- Pluracol™ P410 =: polyether polyol from BASF Corp.

### Test Procedures:

Laminates were prepared by coating one substrate with the adhesive composition and then drying the coating in an oven at 70°C for 2 minutes. The coatweight was in the range of 1.0-1.4 pounds per ream. The second substrate was applied onto coated substrate and pressed through cylinders at 65.5°C. Laminates were cut into strips 25.4 mm (1 inch) wide. A portion of the end of the strip is not coated, so that the substrates can be peeled apart and placed in the opposite jaws of a vertical tensile tester. The other end of the strip is supported to keep the sample in the shape of a letter "T" while the jaws are separated at 254 mm/minute (10 inches/minute). The average force to separate the jaws is reported as the "T-peel" value, in grams of force per 25.4 mm (1 inch) of sample width). Tests are performed at room temperature (18°C to 25°C). "Initial" results are reported on tests performed immediately after laminating; "7 day" results are reported on tests performed on samples stored for 7 days at room temperature; and "2 day boiling" results are reported on tests performed on samples immersed in boiling water for 2 days.

Dynamic Mechanical Analysis was performed by preparing the samples of the adhesive composition by casting dispersion onto Teflon petri dish with 1mm thickness. The film is dried for 2-5 days at room temperature ant then dried in vacuum oven at 50°C for 24 hours, flipped over the film and the other side of film is dried in vacuum oven at 50°C for another 24 hours. The samples were tested in Rheometrics Mechanical Spectrometer (RMS-800)from Rheometrics company at 6.28 cycles/sec at strain of 5% from -50°C to 200°C.

### EXAMPLES

### Example 1: Macromoner

Monomer emulsion was prepared by adding MAA macromonomer solution (12g in 80g H2O) into the emulsifying solution of 344g deionized water, 15.5g surfactant Fes-32, 744g BA, and 4g GMA. 20% solution of monomer emulsion was added into the kettle containing 216g deionized water and 99.5g macromonomer (92MMA/8EA). After 20 minutes stirring, the glass reactor was heated to 90°C while buffer solution of 0.6g Na₂CO₃ and 10g deionized water was fed into the reactor. At 80°C, sodium persulfate was added as a shot and monomer emulsion feed was started for 60 minutes feeding time. Reaction was maintained at 90°C for length of feeds and for an hour hold. After hold, the reaction was cooled to 60°C, and 6.2g of Fe₂SO₄ solution (0.15%) was added and followed by two sets of redox initiator solution: tert-butyl peroxide (1.9g in 10g H₂O and SSF (0.9g in 10g H₂O) in feeding of 20 minutes. Then the reaction was held for 15 minutes and cooled to 40°C, and 2.0 g of biocide Kathon™ (Rohm and Haas Co., Philadelphia, PA) was added. The product was filtered.

### Example 2: Adhesive composition

An adhesive composition was made by mixing the following ingredients. "Parts by Weight" herein means 100 X (weight of the ingredient, including solids and fluid medium) / (total weight of the adhesive composition).

| **Ingredient** | **Parts by Weight** |
|---|---|
| Macromonomer emulsion of Example 1 (50.6% solids) | 29.85 |
| Robond™ PS2000 (54.5% solids) | 39.80 |
| Primal™ Resin 18 (22.0% solids) | 29.85 |
| Pluracol™ P410 (100% solids) | 0.50 |

This adhesive composition was coated onto HSLDPE at room temperature and dried at 70°C and laminated with mPET under weight pressure of cylinder. The T-peel results were as follows:

| | |
|---|---|
| Initial | 377 g/25.4 mm |
| 7 day | 367 g/25.4 mm |
| 2-day boil | 490 g/25.4 mm |

In DMA testing, the Tg (peak of tan(delta) *vs.* temperature) occurred at around -15°C. From 35°C to 200°C, G' values were all between 10 kPa (10⁵ dyne/cm²) and 1 MPa (10⁷ dyne/cm²).

### Example 3: Adhesive Composition

Using the methods of Example 1, a macromonomer emulsion ME2 was prepared of composition 97 BA / 1.5 MAA / 0.6 GMA. Also, a macromonomer emulsion ME3 was prepared by polymerizing ME2 with the macromonomer of Example 1, in the ratio 95 ME2 / 5 Example 1.

| **Ingredient** | **Parts by Weight** |
|---|---|
| ME 3 (50.2% solids) | 46.43 |
| Robond™ PS2000 (54.5% solids) | 26.53 |
| Primal™ Resin 18 (22.0% solids) | 29.53 |
| Pluracol P410 (100% solids) | 0.50 |

This adhesive composition was coated onto HSLDPE at room temperature and dried at 70°C and laminated with mPET under weight pressure of cylinder. The T-peel results were as follows:

| | |
|---|---|
| Initial | 376 g/25.4 mm |
| 7 day | 349 g/25.4 mm |
| 2-day boil | 490 g/25.4 mm |

In DMA testing, the Tg (peak of tan(delta) *vs*. temperature) occurred at around -32°C. From 22°C to 200°C, G' values were all between 10 kPa (10⁵ dyne/cm²) and 1 MPa (10⁷ dyne/cm²).

### Example 4: Adhesive Composition

A repeat of the preparation of ME3 from Example 3 produced ME3b. ME3 and ME3b were each used as the sole ingredient in an adhesive composition. Samples were prepared and tested as in Example 2. T-peel results were as follows:

| Test | ME3 | ME3b |
|---|---|---|
| Initial | 254 g/25.4 mm | 134 g/25.4 mm |
| 7 day | 269 g/25.4 mm | 288 g/25.4 mm |
| 2-day boil | 493 g/25.4 mm | 510 g/25.4 mm |

Composition ME3b was tested in DMA. Tg was around -30°C. G' values from 20°C to 200°C were all between 10 kPa (10⁵ dyne/cm²) and 1 MPa (10⁷ dyne/cm²).

### Example 5: Adhesive Composition using Random Copolymer without presence of macromonomer

Using the methods of Example 1, 2 polymer latices, PL1 and PL2 were prepared with these compositions:
PL1: 85.48 EA / 9.94 MMA / 3.98 AA / 0.60 GMA (51.2% solids)
PL2: 93 BA / 1.43 MAA / 0.57 GMA / 4.6 MMA / 0.40 EA (49.9% solids)
Each latex was used as the sole ingredient in an adhesive composition, which was applied and tested as in Example 2. T-peel results were as follows:

| Test | PL1 | PL2 |
|---|---|---|
| Initial | 275 g/25.4 mm | 96 g/25.4 mm |
| 7 day | 401 g/25.4 mm | 423 g/25.4 mm |
| 2-day boil | 527 g/25.4 mm | 404 g/25.4 mm |

Composition PL1 was tested in DMA. Tg was around 10°C. G' values from 60°C to 200°C were all between 10 kPa (10⁵ dyne/cm²) and 1 MPa (10⁷ dyne/cm²).

### Example 6: Storage Stability

The aqueous latices of the adhesive compositions of Example 2, Example 3, Example 4 (both ME3 and ME3b), and Example 5 (both PL1 and PL2) were stored at 40°C for one month. All of them showed no change in viscosity or appearance.

## Claims

1. An adhesive composition comprising:
(a) 10% to 90% fluid medium, by weight based on the weight of said adhesive composition, and
(b) 10% to 90% at least one acrylic polymer composition, by solid weight based on the weight of said adhesive composition, wherein said acrylic polymer composition comprises as polymerized units:
(i) at least one monomer with carboxyl functionality, and
(ii) at least one carboxyl-reactive monomer, wherein said carboxyl-reactive monomer has molecular weight less than 800.

2. The composition of claim 1, wherein said monomer with carboxylic functionality comprises acrylic acid, methacrylic acid, or a mixture thereof.

3. The composition of claim 1, wherein said carboxyl-reactive monomer comprises at least one monomer selected from the group consisting of glycidyl monomers, acetoacetoxy monomers, acetoacetamide monomers, and mixtures thereof.

4. The composition of claim 3, wherein said carboxyl-reactive monomer comprises glycidyl methacrylate.

5. The composition of claim 1, wherein said acrylic polymer composition further comprises as polymerized units 0.01% to 50% at least one macromonomer of molecular weight of 800 or above, by weight based on the weight of said acrylic polymer composition, wherein said macromonomer is free of reactive groups capable of reacting with said carboxyl functionality.

6. The composition of claim 1, wherein said acrylic polymer composition comprises at least one latex polymer, and wherein said fluid medium is 50% or more water, by weight based on the weight of said fluid medium.

7. The composition of claim 1, wherein said acrylic polymer composition comprises at least one bifunctional acrylic polymer that comprises as polymerized units:
(i) at least one monomer with carboxyl functionality, and
(ii) at least one carboxyl-reactive monomer, wherein said carboxyl-reactive monomer has molecular weight less than 800.

8. A method for bonding substrates comprising: applying a layer of an adhesive composition to a substrate; drying or allowing to dry said layer of said adhesive composition; and contacting at least one subsequent substrate to said layer of said adhesive composition, wherein said adhesive composition comprises:
(a) 10% to 90% fluid medium, by weight based on the weight of said adhesive composition, and
(b) 10% to 90% at least one acrylic polymer composition, by solid weight based on the weight of said adhesive composition, wherein said acrylic polymer composition comprises as polymerized units:
(i) at least one monomer with carboxyl functionality, and
(ii) at least one carboxyl-reactive monomer, wherein said carboxyl-reactive monomer has molecular weight less than 800.
